# EUROPÄISCHE PATENTSCHRIFT

(11) **EP 2 661 810 B1**
(45) Veröffentlichungstag und Bekanntmachung des Hinweises auf die Patenterteilung: **30.09.2015**
(21) Anmeldenummer: 12704362.8
(22) Anmeldetag: 06.01.2012
(51) Int. Cl.: H02P 6/18, H02P 27/08

(54) **VORRICHTUNG ZUR ERMITTLUNG DER POSITION DES LÄUFERS EINER ELEKTRISCHEN MASCHINE**
APPARATUS FOR DETERMINING THE POSITION OF THE ROTOR OF AN ELECTRIC MACHINE
DISPOSITIF SERVANT À DÉTERMINER LA POSITION DU ROTOR D'UNE MACHINE ÉLECTRIQUE

(30) Priorität: 08.01.2011 DE 102011008141
(43) Veröffentlichungstag der Anmeldung: 13.11.2013
(73) Patentinhaber: Strothmann, Rolf, 66123 Saarbrücken (DE)
(72) Erfinder: Strothmann, Rolf, 66123 Saarbrücken (DE)
(74) Vertreter: Bernhardt, Reinhold
(86) Internationale Anmeldenummer: PCT/DE2012/100003
(87) Internationale Veröffentlichungsnummer: WO 2012/092925

(56) Entgegenhaltungen:
- US-A- 4 495 450
- US-A1- 2003 098 666

## Beschreibung

Die Erfindung betrifft eine Vorrichtung zur Ermittlung der Position des Läufers einer elektrischen Maschine in Bezug auf den Stator, wobei die elektrische Maschine mindestens drei Phasenstränge umfasst, die jeweils wenigstens eine Polwicklung mit einem magnetisierbaren Kern aufweisen, mit Einrichtungen zur Erfassung eines Messsignals, das durch die momentanen, von der Position des Läufers abhängigen Magnetisierungsgrade der Polwicklungskerne geprägt ist, wobei es sich bei dem Messsignal um eine entsprechend den momentanen Induktivitäten von zwei der Phasenstränge geteilte Gleichspannung (U_{B}) einer Betriebsspanungsquelle handelt.

Vorrichtungen solcher Art zur Bestimmung der Position des Läufers einer elektrischen Maschine sind aus der EP 1 005 716 B und der DE 10 2006 046 637 A1 bekannt. Innerhalb jeder halben magnetischen Periode besteht ein eindeutiger zur Positionsbestimmung nutzbarer funktionaler Zusammenhang zwischen dem Messsignal und der Läuferposition. Das Messsignal wird bei diesen bekannten Vorrichtungen u.a. am Sternpunkt im Stern verschalteter Phasenstränge abgegriffen.

Aus der US 4,495,450 A ist eine Vorrichtung zur Ermittlung der Position des Läufers einer elektrischen Maschine in Bezug auf den Stator bekannt, wobei die elektrische Maschine drei Phasenstränge umfasst, die jeweils wenigstens eine Polwicklung aufweisen. Ein von der Läuferposition abhängiges Messsignal beruht auf der durch die Drehung des Läufers in den Polwicklungen der elektrischen Maschine induzierten Spannung.

Der Erfindung liegt die Aufgabe zugrunde, eine neue Vorrichtung der eingangs genannten Art zu schaffen, die keinerlei Vorkehrungen an der elektrischen Maschine selbst oder/und Eingriffe in diese elektrische Maschine erfordert.

Die diese Aufgabe lösende Vorrichtung nach der Erfindung ist dadurch gekennzeichnet, dass die Einrichtungen zur Erfassung des Messsignals zum Abgreifen des Messsignals ausschließlich außerhalb der elektrischen Maschine an der Bestromung der elektrischen Maschine dienenden Anschlussleitern vorgesehen sind und Schalteinrichtungen zur zeitweiligen Trennung jeweils eines der Anschlussleiter von der Betriebsspannungsquelle aufweisen, wobei das Messsignal an dem von der Betriebsspannungsquelle getrennten Anschlussleiter abgreifbar ist. Vorteilhaft lässt sich die erfindungsgemäße Vorrichtung zur Bestimmung der momentanen Läuferposition unabhängig von der elektrischen Maschine vollständig in eine dem Motorbetrieb der elektrischen Maschine dienende Bestromungseinrichtung integrieren.

Die Phasenstränge der elektrischen Maschine können im Stern oder/und Dreieck verschaltet sein.

In einer besonders bevorzugten Ausführungsform der Erfindung sind Schalteinrichtungen zur zeitweiligen Trennung wenigstens eines der Anschlussleiter von einer Betriebsspannungsquelle vorgesehen und das Messsignal ist weitgehend unabhängig von Störeinflüssen an dem jeweils von der Betriebsspannungsquelle getrennten Anschlussleiter abgreifbar.

Insbesondere können Schalteinrichtungen zur aufeinanderfolgenden Trennung der Anschlussleiter von der Betriebsspannungsquelle innerhalb eines kurzen Zeitraums, in dem Änderungen der Läuferposition vernachlässigbar sind, vorgesehen und an den jeweils von der Betriebsspannung abgetrennten Anschlussleitern somit mehrere Messsignale abgreifbar sein. Entsprechend genauer lässt sich die Läuferposition bestimmen.

In weiterer Ausgestaltung der Erfindung sind Einrichtungen zur Bereitstellung einer gesonderten, das Messsignal erzeugenden Messspannung vorgesehen oder/und das Messsignal ergibt sich aus einer im Motorbetrieb der elektrischen Maschine anliegenden Betriebsspannung.

Bei der gesonderten Messspannung handelt es sich vorzugsweise um einen Messspannungsimpuls, bei der Betriebsspannung um im Rahmen einer Impulsweitenmodulation angelegte Bestromungsimpulse.

Vorzugsweise dient als Messsignal eine entsprechend den momentanen Induktivitäten von wenigstens zwei der Phasenstränge geteilte Gleichspannung (U_{B}) einer Betriebsspannungsquelle.

Die Erfindung wird nachfolgend anhand von Ausführungsbeispielen und der beiliegenden, sich auf diese Ausführungsbeispiel beziehenden Zeichnungen näher erläutert. Es zeigen:
- Fig. 1: eine erfindungsgemäß Vorrichtung in schematischer Darstellung,
- Fig. 2 und 3: das Messprinzip der Vorrichtung von Fig. 1 erläuternde Darstellungen,
- Fig. 4: ein weiteres Ausführungsbeispiel für eine erfindungsgemäße Vorrichtung, und
- Fig. 5: eine das Messprinzip der Vorrichtung von Fig. 4 erläuternde Darstellung.

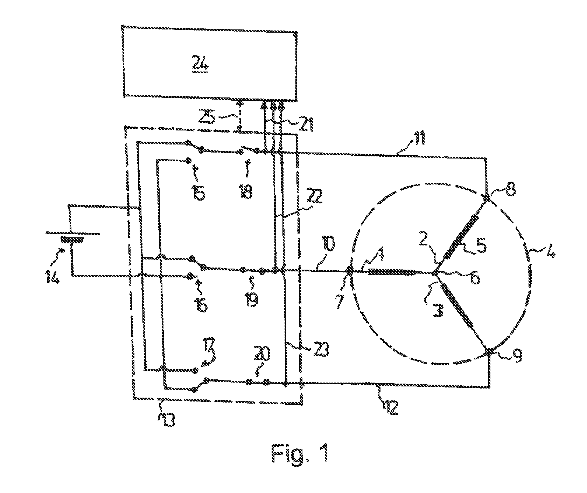

Eine in Fig. 1 schematisch dargestellte elektrische Maschine 4 umfasst drei Phasenstränge 1,2,3. Je nach Anzahl der magnetischen Perioden der elektrischen Maschine 1 weist jeder der Phasenstränge 1,2,3 mehrere in Reihe geschaltete Polwicklungen 5 mit je einem Eisenkern auf.

Die drei Phasenstränge 1,2,3 sind an einem Sternpunkt 6 miteinander verschaltet. Die anderen Enden der Phasenstränge 1,2,3 führen nach außen zu Anschlüsse 7,8,9 für Leitungen 10,11,12, die der Bestromung der elektrischen Maschine 1 dienen.

Die Leitungen 10,11,12 sind über eine Bestromungsschaltung 13 mit einer Batterie 14 verbindbar. Die Bestromungsschaltung 13 umfasst Schalteinrichtungen 15,16,17, durch die über die Leitungen 10,11,12 wahlweise der Plus- oder Minuspol der Batterie 14 an die betreffenden Phasenstränge 1,2,3 gelegt werden kann. Die Bestromungsschaltung 13 weist ferner Unterbrecherschaltungen 18,19,20 auf, welche wahlweise einen der Phasenstränge 1,2,3 gänzlich von der Batterie 14 trennen können.

In dem gezeigten Ausführungsbeispiel zweigen innerhalb einer die Bestromungsschaltung 13 bildenden Baueinheit Signalleitungen 21,22,23 zum Abgreifen eines Spannungssignals von den Leitungen 10,11,12 ab. Die Signalleitungen 21,22,23 führen die Spannungssignale einer Messschaltung 24 zu. Über eine Steuerleitung 25 ist die Messschaltung 24 mit der Bestromungsschaltung 13 verbunden.

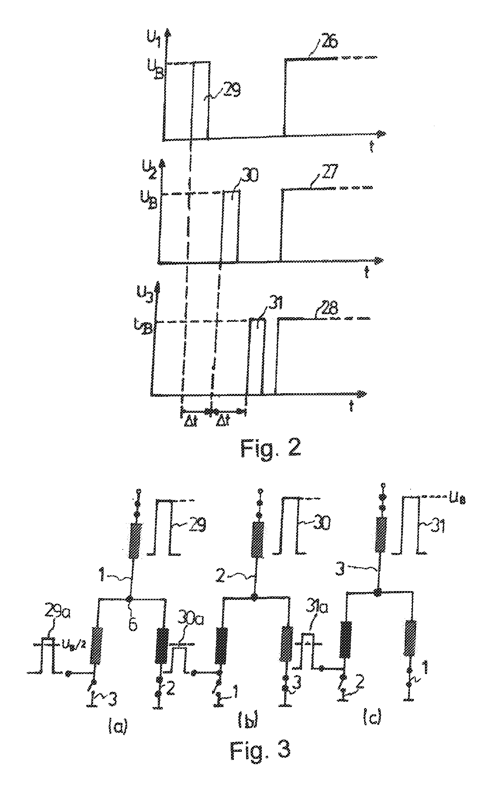

Gemäß Fig. 2 werden im Motorbetrieb der elektrischen Maschine 4 durch die Bestromungsschaltung 13 zyklisch Bestromungsimpulse 26,27,28 der Batteriespannung Ua entsprechend dem Impulsweitenmodulationsverfahren (PWM-Verfahren) an die Phasenstränge 1,2,3 angelegt. Gesteuert durch die Messschaltung 24 erzeugt die Bestromungsschaltung 13 ferner in jedem n-ten PWM-Zyklus (n = 1,2,3 ...) zusätzliche Messimpulse 29,30,31, die zueinander um Δ_{†} zeitversetzt an jeweils zwei der drei Phasenstränge 1,2,3 anliegen, sodass die Batteriespannung U_{B} über den beiden Phasensträngen abfällt. Der jeweilige dritte Phasenstrang ist währenddessen durch die betreffende Unterbrecherschaltung 18,19 oder 20 von der Batterie 14 getrennt. Die Messschaltung 24 ermittelt über die Leitungen 21,22,23 jeweils das durch die Messimpulse 29,30,31 geprägte Potential an dem freigeschalteten Ende des betreffenden Phasenstrangs.

Beim Abfall der Batteriespannung U_{B} an je zwei der Phasenstränge 1,2,3 wird die Batteriespannung U_{B} durch die betreffenden Phasenstränge geteilt, wobei die geteilte Spannung U_{S1},U_{S2},U_{S3} an dem freigeschalteten Ende des jeweiligen dritten Phasenstrangs anliegt. Die Messimpulse 29,30,31 erzeugen an den freigeschalteten Enden also Impulse der Höhe U_{S1},U_{S2},U_{S3} entsprechend dem Spannungsteilerverhältnis.

Für das Spannungsteilerverhältnis sind die Magnetisierungsgrade der Eisenkerne der Polwicklungen maßgebend, deren durch das Erregerfeld der elektrischen Maschine hervorgerufener Anteil innerhalb einer jeden halben magnetischen Periode eine eindeutige Funktion der Position des Läufers in Bezug auf den Stator der elektrischen Maschine ist. Aus den laufend ermittelten Impulsen der Höhe U_{S1},U_{S2},U_{S3} lässt sich daher die Position des Läufers ermitteln, wie dies in der hier einbezogenen DE 10 2006 046 637 A1 des Anmelders beschrieben ist.

Wie aus Fig. 3 hervorgeht, schwanken die am freigeschalteten Ende abgegriffenen, durch die Messimpulse 29,30,31 erzeugten Impulse in ihre Höhe um den Spannungswert U_{B}/2. Diesen Impulsen ist die im freigeschalteten Phasenstrang induzierten Spannung (EMK) überlagert, die sich jedoch innerhalb eines PWM-Zyklus praktisch nicht ändert und somit als konstanter Wert durch Differenzbildungen U_{S1} - U_{S2}, U_{S2} - U_{S3} und U_{S1} - U_{S3} zwischen den abgegriffenen Spannungen eliminierbar ist. Aus den Differenzsignalen, lässt sich die Position des Läufers ermitteln, wie dies aus der oben genannten DE 10 2006 046 637 A1 hervorgeht.

Anstelle der gesonderten Messimpulse 29,30,31 ließen sich zur Erzeugung positionsabhängiger Messsignale auch die zu unterschiedlichen Zeiten abfallenden Flanken der Bestromungsimpulse 26,27,28 selbst nutzen. Diese Flanken führen an den jeweils freigeschalteten Phasensträngen zu einem Treppensprung, wobei die Sprunghöhe als Messsignal dienen kann.

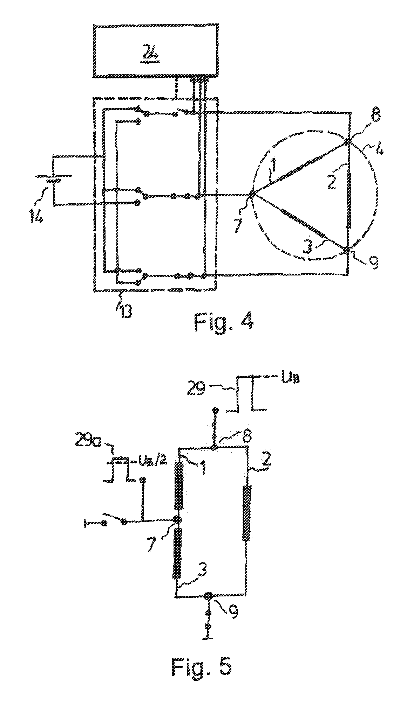

Eine in Fig. 4 gezeigte Vorrichtung unterscheidet sich von der Vorrichtung von Fig. 1 dadurch, dass Phasenstränge 1,2,3 nicht im Stern sondern im Dreieck verschaltet sind. Wie bei dem Ausführungsbeispiel von Fig. 1 lässt sich auch bei diesem Ausführungsbeispiel jeder der drei Bestromungsanschlüsse 7,8,9 der elektrischen Maschine 4 wahlweise von der Batterie 14 trennen.

Gemäß Fig. 5 wird z.B. an die Anschlüsse 8,9 ein Messimpuls 29 angelegt, indem der Pluspol der Batterie 14 mit dem Anschluss 8 und der Minuspol mit dem Anschluss 9 verbunden wird. Dieser Messimpuls 29 erzeugt am freigeschalteten Anschluss 7 einen Spannungsimpuls, dessen Höhe durch das momentane Spannungsteilerverhältnis zwischen den Phasensträngen 1 und 3 bestimmt ist.

Auch bei dem Ausführungsbeispiel von Fig. 4 ließen sich anstelle gesonderter Messimpulse zur Positionsermittlung des Läufers Bestromungsimpulse selbst nutzen, die zu treppenartigen Sprüngen des Potentials am jeweils freigeschalteten Bestromungsanschluss führen, wobei als zur Positionsbestimmung nutzbares Signal die Treppenhöhe zu ermitteln ist.

## Patentansprüche

1. Vorrichtung zur Ermittlung der Position des Läufers einer elektrischen Maschine (4) in Bezug auf den Stator, wobei die elektrische Maschine (4) mindestens drei Phasenstränge (1,2,3) umfasst, die jeweils wenigstens eine Polwicklung mit einem magnetisierbaren Kern aufweisen, mit einer Bestromungsschaltung (13), die Schalteinrichtungen (15,16,17), mit denen über Leitungen (10,11,12) wahlweise der Plus- oder Minuspol einer Betriebsspannungsquelle (14) an die betreffenden Phasenstränge (1,2,3) gelegt werden kann, und weitere Schalteinrichtungen (18,19,20) umfasst, welche wahlweise einen der Phasenstränge (1,2,3) gänzlich von der Betriebsspannungsquelle (14) trennen können, sowie mit Einrichtungen (18-25) zur Erfassung eines Messsignals (29a-31 a), das durch die momentanen, von der Position des Läufers abhängigen Magnetisierungsgrade der Polwicklungskerne geprägt ist, wobei es sich bei dem Messsignal (29a-31 a) um eine entsprechend den momentanen Induktivitäten von zwei der Phasenstränge (1,2,3) geteilte Gleichspannung (U_{B}) der Betriebsspannungsquelle (14) handelt,
**dadurch gekennzeichnet,**
**dass** die Einrichtungen (18-25) zur Erfassung des Messsignals (29a-31a) zum Abgreifen des Messsignals (29a-31 a) ausschließlich außerhalb der elektrischen Maschine (4) an dem der Bestromung der elektrischen Maschine dienenden Leitungen (10-12) und die weiteren Schalteinrichtungen (18-20) zur zeitweiligen Trennung jeweils einer der Leitungen (10-12) von der Betriebsspannungsquelle (14) vorgesehen sind, wobei das Messsignal (29a-31 a) jeweils an der von der Betriebsspannungsquelle (14) getrennten Leitung (10-12) abgreifbar ist.

2. Vorrichtung nach Anspruch 1,
**dadurch gekennzeichnet,**
**dass** die Phasenstränge (1,2,3) im Stern oder/und Dreieck verschaltet sind.

3. Vorrichtung nach 1 oder 2,
**dadurch gekennzeichnet,**
**dass** die Schalteinrichtungen (18-20) zur aufeinanderfolgenden Trennung der Anschlussleiter (10-12) von der Betriebsspannungsquelle (14) innerhalb eines kurzen Zeitraums, in dem eine Positionsänderung des Läufers vernachlässigbar ist, vorgesehen sind und dass an dem jeweils von der Betriebsspannungsquelle (14) abgetrennten Anschlussleiter (10-12) das Messsignal (29a-31 a) abgreifbar ist.

4. Vorrichtung nach einem der Ansprüche 1 bis 3,
**dadurch gekennzeichnet,**
**dass** Einrichtungen (13-25) zur Bereitstellung einer gesonderten, das Messsignal (29a-31 a) erzeugenden Messspannung (29-31) oder/und dass sich das Messsignal (29a-31 a) aus einer im Motorbetrieb der elektrischen Maschine (4) anliegenden Betriebsspannung (26-28) ergibt.

5. Vorrichtung nach Anspruch 4,
**dadurch gekennzeichnet,**
**dass** die gesonderte Messspannung ein Messspannungsimpuls (29-31) ist.

6. Vorrichtung nach Anspruch 4 oder 5,
**dadurch gekennzeichnet,**
**dass** es sich bei der Betriebsspannung um im Rahmen einer Impulsweitenmodulation angelegte Bestromungsimpulse (26-28) handelt.

## Claims

1. Apparatus for determining the position of the rotor of an electric machine (4) with respect to the stator, wherein the electric machine (4) comprises at least three phase strings (1, 2, 3) which each have at least one pole winding with a magnetizable core, with an energization circuit (13) which comprises switching devices (15, 16, 17) with which optionally the positive or negative pole of an operating voltage source (14) can be applied to the phase strings (1, 2, 3) in question via lines (10, 11, 12), and comprises further switching devices (18, 19, 20) which can optionally isolate one of the phase strings (1, 2, 3) in its entirety from the operating voltage source (14), and with devices (18-25) for acquiring a measured signal (29a-31a) which is influenced by the instantaneous degree of magnetization of the pole-winding cores which is dependent on the position of the rotor, wherein the measured signal (29a-31a) is a DC voltage (U_{B}) of the operating voltage source (14), which DC voltage is divided according to the instantaneous inductances of two of the phase strings (1, 2, 3),
**characterized**
**in that** the devices (18-25) for acquiring the measured signal (29a-31a) are provided to tap the measured signal (29a-31a) exclusively outside of the electric machine (4) at the lines (10-12) which are used to energize the electric machine and the further switching devices (18-20) are provided for temporarily isolating in each case one of the lines (10-12) from the operating voltage source (14), wherein the measured signal (29a-31a) can in each case be tapped at the line (10-12) which is isolated from the operating voltage source (14).

2. Apparatus according to Claim 1,
**characterized**
**in that** the phase strings (1, 2, 3) are connected in star and/or delta.

3. Apparatus according to Claim 1 or 2,
**characterized**
**in that** the switching devices (18-20) are provided for successive isolation of the connection conductors (10-12) from the operating voltage source (14) within a short period of time, in which a change in position of the rotor is negligible, and in that the measured signal (29a-31a) can be tapped at the connection conductor (10-12) which is in each case isolated from the operating voltage source (14).

4. Apparatus according to any of Claims 1 to 3,
**characterized**
**in that** devices (13-25) for providing a separate measured voltage (29-31) which generates the measured signal (29a-31a) and/or in that the measured signal (29a-31a) results from an operating voltage (26-28) present during motor operation of the electric machine (4).

5. Apparatus according to Claim 4,
**characterized**
**in that** the separate measured voltage is a measured voltage pulse (29-31).

6. Apparatus according to Claim 4 or 5,
**characterized**
**in that** the operating voltage is made up of energization pulses (26-28) applied as part of pulse-width modulation.

## Revendications

1. Dispositif pour déterminer la position du rotor d'une machine électrique (4) par référence au stator, dans lequel la machine électrique (4) comprend au moins trois conducteurs de phases (1, 2, 3), qui comportent chacun au moins un enroulement polaire avec un noyau susceptible d'être aimanté, comprenant un circuit d'alimentation (13), qui inclut des dispositifs de commutation (15, 16, 17) au moyen desquels le pôle plus ou le pôle moins d'une source de tension de service (14) peut être appliqué, via des lignes (10, 11, 12), sélectivement aux conducteurs de phases (1, 2, 3) concernés, et qui inclut d'autres dispositifs de commutation (18, 19, 20) qui peuvent sélectivement séparer l'un des conducteurs de phase (1, 2, 3) entièrement vis-à-vis de la source de tension de service (14), et comprenant des systèmes (18-25) pour détecter un signal de mesure (29a-31a), qui est influencé par le degré d'aimantation momentané, dépendant de la position du rotor, des noyaux des enroulements polaires, ledit signal de mesure (29a-31a) étant la tension continue (E_{B}) de la source de tension de service (14) subdivisée par deux des conducteurs de phase (1, 2, 3) en correspondance des inductances momentanées,
**caractérisé en ce que**
les systèmes (18-25) pour détecter le signal de mesure (29a-31a) sont prévus pour palper le signal de mesure (29a-31a) exclusivement à l'extérieur de la machine électrique (4) au niveau des lignes (10-12) servant à l'alimentation électrique de la machine électrique, et les autres dispositifs de commutation (18-20) sont prévus pour séparer temporairement respectivement l'une des lignes (10-12) vis-à-vis de la source de tension de service (14), le signal de mesure (29a-31a) étant susceptible d'être palpé respectivement au niveau de la ligne (10-12) séparée de la source de tension de service (14).

2. Dispositif selon la revendication 1,
**caractérisé en ce que** les conducteurs de phase (1, 2, 3) sont branchés en étoile et/ou en triangle.

3. Dispositif selon la revendication 1 ou 2,
**caractérisé en ce que**
les dispositifs de commutation (18-20) sont prévus pour séparer en succession les unes après les autres les lignes de connexion (10-12) par rapport à la source de tension de service (14) à l'intérieur d'une courte période temporelle dans laquelle une modification de position du rotor est négligeable, et **en ce que** le signal de mesure (29a-31a) est susceptible d'être palpé au niveau de la ligne de connexion (10-12) respectivement séparée de la source de tension de service (14).

4. Dispositif selon l'une des revendications 1 à 3,
**caractérisé en ce qu'**il est prévu des moyens (13, 25) pour préparer une tension de mesure particulière (29, 31) qui engendre le signal de mesure (29a-31a) et/ou **en ce que** le signal de mesure (29a-31a) résulte d'une tension de service (26-28) appliquée dans le fonctionnement de la machine électrique (4) en moteur.

5. Dispositif selon la revendication 4,
**caractérisé en ce que** la tension de mesure particulière est une impulsion de tension de mesure (29-31).

6. Dispositif selon la revendication 4 ou 5,
**caractérisé en ce que** la tension de service est une impulsion d'alimentation (26-28) appliquée dans le cadre d'une modulation en largeur d'impulsion.
